# EUROPÄISCHE PATENTANMELDUNG

(11) **EP 4 047 807 A2**
(43) Veröffentlichungstag der Anmeldung: **24.08.2022**
(21) Anmeldenummer: 22156806.6
(22) Anmeldetag: 15.02.2022
(51) Int. Cl.: H02N 2/00, H02N 2/02, H02N 2/06, H02N 2/10, H02N 2/14

(54) **VORRICHTUNG UND VERFAHREN ZUR LINEAREN ODER ROTATORISCHEN POSITIONIERUNG**

(30) Priorität: 15.02.2021 DE 102021103462
(71) Anmelder: SmarAct Holding GmbH, 26135 Oldenburg (DE)
(72) Erfinder: Kortschack, Axel, 26123 Oldenburg (DE)
(74) Vertreter: Eisenführ Speiser

(57) **Zusammenfassung**

Die Erfindung betrifft ein Antrieb und ein Verfahren für eine Trägheits- oder Mehraktorantriebsvorrichtung mit mindestens einem stationären Teil (7e) und mindestens einem hierzu beweglich angeordneten Objekt (7a). Erfindungsgemäß wird zwischen dem Aktor (7b) (oder einer kraftübertragenden Struktur) und dem anzutreibenden Objekt (7a) mindestens ein vorgespannter Wälzkörper (7d) vorgesehen, über den die Kraft des Aktors (7b) auf das anzutreibende Objekt (7a) übertragen wird, so dass eine Kraft in Höhe der sich aufgrund der Vorspannung ergebenen Rollwiderstand auf das zu bewegende Objekt (7a) übertragen werden kann.

## Beschreibung

Die vorliegende Erfindung betrifft das Gebiet der linearen und/oder rotatorischen Positionierung eines Objekts und insbesondere einen Antrieb für eine Trägheits- oder Mehraktorantriebsvorrichtung mit einem stationären Teil und mindestens einem hierzu beweglich angeordneten makroskopisch zu bewegenden Objekt sowie ein entsprechendes Verfahren.

Es ist bekannt, Trägheitsantriebe (z.B. Piezo-Slip-Stick-Antriebe) mit elektrischen Signalen zu versorgen, um ein zu positionierendes Objekt mit einer hohen Bewegungsauflösung zu bewegen bzw. zu positionieren.

Beispielhafte Ausführungen sind z.B. aus "Dynamic piezoelectric translation devices" von D.W. Pohl (Review of Scientific Instruments, vol. 58 (1), Januar 1987, Seiten 54 bis 57) und WO 98/19347 A2 bekannt.

Ebenfalls ist es bekannt, ein Objekt durch den Einsatz mehrerer Aktoren mit einer hohen Bewegungsauflösung zu positionieren, wobei hier die mehreren Aktoren in einer geeigneten Weise zusammenarbeiten, um gemeinsam ein zu positionierendes Objekt zu bewegen.

Beispiele hierzu finden sich in EP 0 750 356 A1, WO 93/19494 A1 und DE 10 2009 013 849 A1.

Es wird hierbei jeweils über eine oder mehrere Reibflächen ein Objekt angetrieben, wobei die Bewegungen der Aktoren über in Kontakt stehende Reibflächen der Aktoren und des Objekts auf das zu positionierende Objekt übertragen werden. Die Reibflächen werden im Betrieb stark beansprucht, so dass dem Stand der Technik entsprechend verschleißfeste Materialien, wie z.B. Keramik, als Reibpartner gewählt werden.

Es hat sich gezeigt, dass es schwer ist, den Verschleiß dieser Reibantriebe zu begrenzen und die Reibparameter stabil zu halten, insbesondere wenn die Reibantriebe ohne Schmierstoffe in Ultrahochvakuumanwendungen zum Einsatz kommen sollen.

Ein der vorliegenden Erfindung zugrundeliegendes Ziel ist es, die Nachteile der Ansätze aus dem Stand der Technik, insbesondere hinsichtlich Verschleiß und Variation der Reibparameter, zu vermeiden oder zumindest zu vermindern, ohne auf die gewünschte hohe Bewegungsauflösung zu verzichten.

Es ist daher gewünscht, eine Lösung vorzustellen, die eine lineare und/oder rotatorische Positionierung eines Objekts mit geringerem Verschleiß und stabilerem Verfahren mit hoher Bewegungsauflösung zulässt.

Erfindungsgemäß wird nach einem ersten Aspekt eine Vorrichtung zur nicht-resonanten linearen und/oder rotatorischen Positionierung eines Objekts vorgeschlagen, wie sie in Anspruch 1 definiert ist, nämlich mit wenigstens einem Aktor, wenigstens einem Wälzkörper, wenigstens einem Gegenlager, wobei das wenigstens eine Gegenlager und der wenigstens eine Wälzkörper dazu ausgestaltet sind, dass der wenigstens eine Wälzkörper zwischen dem Gegenlager und dem zu positionierenden Objekt anzuordnen ist, so dass der Wälzkörper auf wenigstens einer Rollfläche abrollen kann, wobei die wenigstens eine Rollfläche eine Oberfläche des Gegenlagers und/oder eine Oberfläche des zu positionierenden Objekts umfasst, wobei der Aktor dazu ausgestaltet ist, wenigstens eine erste Bewegung und eine der ersten Bewegung entgegen gerichtete zweite Bewegung auszuführen, wobei die erste Bewegung auf eine Beschleunigung begrenzt ist, bei der ein Widerstand gegenüber einem Aufnehmen eines Abrollens des wenigstens einen Wälzkörpers auf der wenigstens einen Rollfläche nicht überwunden wird, wobei die zweite Bewegung eine Beschleunigung umfasst, mit der ein Rollwiderstand zwischen Wälzkörper und Rollfläche überwunden wird.

Erfindungsgemäß wird nach einem zweiten Aspekt ein Verfahren zur nicht-resonanten linearen und/oder rotatorischen Positionierung eines Objekts vorgeschlagen, wie es in Anspruch 10 definiert ist, nämlich mit Anordnen eines Wälzkörpers zwischen einem Gegenlager und dem zu positionierenden Objekt, so dass der Wälzkörper auf einer Rollfläche abrollen kann, wobei die eine Rollfläche eine Oberfläche des Gegenlagers und/oder eine Oberfläche des zu positionierenden Objekts umfasst, Ansteuern eines Aktors zum Ausführen einer ersten Bewegung, wobei die erste Bewegung auf eine Beschleunigung begrenzt ist, bei der ein Widerstand gegenüber einem Aufnehmen eines Abrollens des Wälzkörpers auf der Rollfläche nicht überwunden wird, und Ansteuern des Aktors zum Ausführen einer der ersten Bewegung entgegen gerichteten zweiten Bewegung, wobei die zweite Bewegung eine Beschleunigung umfasst, mit der ein Rollwiderstand zwischen Wälzkörper und Rollfläche überwunden wird, wobei das Ansteuern des Aktors zum Ausführen der ersten Bewegung und das Ansteuern des Aktors zum Ausführen der zweiten Bewegung abwechselnd durchgeführt wird, um das Objekt zu positionieren.

Ein Teil des Hintergrunds der vorliegenden Erfindung findet sich in den folgenden Überlegungen.

Es wurde erkannt, dass bei einem Vorsehen eines (insbesondere gezielt vorgespannten) Wälzkörper, über den die Kraft eines Aktors auf das anzutreibende Objekt übertragen wird, eine Kraft in Höhe des sich ergebenen Rollwiderstands (bzw. des Widerstands gegen eine Aufnahme des Rollens) auf das zu bewegende Objekt übertragen werden kann. Somit kann auf voneinander abgleitende, also in Reibkontakt stehende, Flächen verzichtet werden, so dass keine Komponenten im Antrieb vorhanden sein müssen, die einem hohen Verschleiß ausgesetzt sind.

Es kann sich ergeben, dass sich der Widerstand gegenüber einem Aufnehmen eines Abrollens des wenigstens einen Wälzkörpers auf der wenigstens einen Rollfläche (der auch als Anfahrwiderstand bezeichnet werden kann) vom Rollwiderstand (also dem Widerstand, der zur Aufrechterhaltung des Rollen zu überwinden ist) unterscheidet. In einem solchen Fall kann die erste Bewegung auch eine Beschleunigung umfassen, die eigentlich zur Überwindung des Rollwiderstandes ausreichen würde, was aber nicht zum Tragen kommt, das infolge des höheren Anfahrwiderstands kein Rollen zustande kommt.

Das Gegenlager ist im Rahmen der vorliegenden Erfindung einerseits eine Struktur, auf der der mindestens eine Wälzkörper abrollen kann, wobei das Gegenlager (gegebenenfalls im Zusammenspiel mit dem zu positionierenden Körper) zudem selbst eine Vorspannung auf den mindestens einen Wälzkörper aufbringt und/oder eine von außen auf das Gegenlager aufgebrachte Vorspannung entsprechend weitergibt (also diese Vorspannung nicht selbst absorbiert oder dieser ausweicht).

Die Rollfläche, die dazu vorgesehen ist, dass der Wälzkörper auf ihr abrollt, ist nicht notwendigerweise eine einteilige Fläche, da das Abrollen auch auf separaten Flächen möglich ist. Es ist zudem nicht notwendigerweise der Fall, dass die Rollfläche als solche eben sein muss, da das Abrollen auch auf einer gekrümmten oder geformten Fläche erfolgen kann.

Soweit hier auf die Oberfläche des zu positionierenden Objekts abgestellt wird, ist darauf hinzuweisen, dass sich dies auch auf eine Oberfläche einer Struktur beziehen kann, die mit dem eigentlichen zu positionierenden Objekt gekoppelt oder verbunden ist, wobei hinsichtlich der Positionierung bzw. Bewegung diese Kombination aus dem zu positionierenden Objekt im strengeren Sinne und der zusätzlich zwischengeschalteten Struktur als zu positionierendes Objekt im weiteren Sinne anzusehen ist.

In einer vorteilhaften Ausgestaltung eines Aspekts der Erfindung weist die Vorrichtung eine Basis auf und das wenigstens eine Gegenlager ist über den wenigstens einen Aktor mit der Basis für eine relative Bewegung des Gegenlager zur Basis verbunden.

Erfindungsgemäß kann mindestens ein Wälzkörper, direkt oder indirekt zwischen mindestens einem Aktor (bzw. einer kraftübertragenden Struktur) und mindestens einem zu positionierenden Objekt angeordnet sein, wobei der mindestens eine Wälzkörper vorzugsweise vorgespannt ist, so dass für eine Relativbewegung des Aktors (bzw. der kraftübertragenden Struktur) gegenüber dem zu positionierenden Objekt ein bestimmter Widerstand überwunden werden muss, was als Kraft des sich ergebenen Antriebs nutzbar ist, wobei der Vorschub des Aktors bei einer niedrigen Beschleunigung des Aktors und entsprechend geringer Massenträgheitskraft über den Wälzkörper auf das zu anzutreibende Objekt übertragen wird, während der Vorschub des Aktors bei einer hohen Beschleunigung des Aktors und entsprechend hoher Massenträgheitskraft zu einem geringeren Anteil - bis überhaupt nicht - auf das zu positionierende Objekt übertragen wird. (Es kommt zum Abrollen, wenn die Massenträgheitskraft größer wird als der Rollwiderstand.) Infolge dessen können alle für Trägheitsantriebe geeignete Steuersignale auch für den erfindungsgemäßen Trägheitsantrieb genutzt werden.

Es ist von Vorteil, wenn ein mehrere Rollen oder ähnliches aufweisender Wälzkörper zwischen zwei Elementen (zu positionierendes Objekt einerseits und Gegenlager anderseits) angeordnet ist, die in Bewegungsrichtung entweder beide nicht oder beide gleichförmig ihre Ausdehnung ändern, da ansonsten zwischen den verschiedenen Rollen bei ungleichmäßiger Ausdehnung (oder Verkürzung) eine Spannung auftreten würde. Diese Beschränkung betrifft nicht Konstellationen bei denen lediglich eine Rolle oder ähnliches vorgesehen ist.

In einer anderen vorteilhaften Ausgestaltung eines Aspekts der Erfindung weist die Vorrichtung eine Trägheitsmasse auf und der Aktor ist dazu ausgestaltet, die Trägheitsmasse mit dem zu positionierenden Objekt für eine relative Bewegung der Trägheitsmasse zum zu positionierenden Objekt zu verbinden.

Im Rahmen der Erfindung kann der Aktor zwischen zwei Massen angeordnet werden, die, wenn der Aktor mit für Trägheitsantriebe typischen Signalfolgen angesteuerter wird, relativ zueinander schwingen und dabei aufgrund einer unterschiedlichen Masse Nettoimpulse erzeugen. Mindestens eine der Massen ist gegenüber einem stationären Objekt über mindestens einen vorgespannten Wälzkörper gelagert, so dass eine Relativbewegung von dieser Masse zum stationären Objekt nur nach Überwinden des entsprechenden Widerstands gegen ein Rollen durch einen Nettoimpuls möglich ist. Wenn die Nettoimpulse groß genug sind, diesen Widerstand zu überwinden, so kommt es zu einer Relativbewegung zwischen dem stationären Objekt und der Baugruppe (bestehend aus den zwei Massen mit dem Aktor). Wenn die Nettoimpulse zu klein sind, kommt es nicht zu der Relativbewegung, da der Rollwiderstand nicht überwunden wird. Somit können auch für diese Ausführungsform alle für Trägheitsantriebe geeignete Ansteuerungen, bei denen es richtungsabhängig zu unterschiedlich hohen Beschleunigungen kommt, genutzt werden, um eine makroskopische Bewegung zu erzeugen.

Die Lagerung über den Wälzkörper erlaubt im Übrigen einerseits, dass das Wälzlager zur Kraftübertragung genutzt werden kann (wobei durch Einstellen der entsprechenden Vorspannung eine Einstellung der zur Bewegung nötigen Kräfte bzw. Beschleunigungen möglich ist), und andererseits, dass das positionierende Objekt gegenüber der Basis geführt wird.

In einer anderen vorteilhaften Ausgestaltung eines Aspekts der Erfindung weist die Vorrichtung ferner wenigstens eine Führung des zu positionierenden Objekts auf. Es sollte klar sein, dass die Führung so leichtgängig ist, dass die Bewegung des zu positionierenden Objekts dadurch nicht verhindert oder über Gebühr beschränkt wird. Die Führung erlaubt einerseits eine Einschränkung oder Verhinderung einer Bewegung des Objekts in einem nicht erwünschten Freiheitsgrad, wobei die Führung zudem vorteilhafterweise Kräfte von außen aufnehmen kann, damit diese den eigentlichen Antrieb nicht beschädigen.

In einer bevorzugten Variante der obigen Ausgestaltung umfasst die wenigstens eine Führung ein Gleitlager, ein Wälzlager, ein magnetisches Lager, ein Luftlager und/oder ein Festkörpergelenk oder besteht daraus.

In einer anderen vorteilhaften Ausgestaltung eines Aspekts der Erfindung umfasst der wenigstens eine Wälzkörper eine Walze, eine Nadel, einen Kegel und/oder eine Kugel oder besteht daraus. Die Ausgestaltung des bzw. der Walzkörper kann unter Berücksichtigung der Rahmenbedingungen des gewünschten Einsatzes gewählt werden, wobei dies nicht nur die räumliche Ausgestaltung betrifft, sondern beispielsweise auch die Materialwahl bei der das Zusammenspiel von Wälzkörper und Rollfläche zu berücksichtigen ist.

In einer anderen vorteilhaften Ausgestaltung eines Aspekts der Erfindung umfasst der wenigstens eine Wälzkörper ein Kugel- und/oder Walzenlager. Mit dem Kugel- und/oder Walzenlager kann ein Roll- bzw. Anfahrwiderstand gegenüber einer entsprechenden Aufnahme am Objekt oder am Gegenlager gezielt eingestellt werden, wobei das Kugel- und/oder Walzenlager als Ganzes wiederum gegenüber dem Gegenlager bzw. dem Objekt abrollen kann. Ist der innere Widerstand eines solchen Wälzkörpers vergleichsweise gering, wird der Widerstand gegenüber einem Aufnehmen eines Abrollens des durch das Kugel- und/oder Walzenlager gebildeten Wälzkörpers auf der Rollfläche im Wesentlichen durch Oberfläche des Wälzkörpers und der Rollfläche bestimmt, was dann von Vorteil sein kann, wenn das zu positionierende Objekt und das Gegenlager gegenüber der Außenfläche des Wälzkörpers unterschiedliche Rollverhalten aufweisen.

In einer anderen vorteilhaften Ausgestaltung eines Aspekts der Erfindung umfasst die Vorrichtung wenigstens eine einstellbare Vorspanneinheit, die dazu ausgestaltet ist, eine einstellbare Kontaktkraft zwischen dem wenigstens einen Wälzkörper und der wenigstens einen Rollfläche zu bewirken.

Es ist nicht notwendig, dass die zwischen Wälzkörper und Rollfläche wirkende Normalkraft einstellbar ist, da diese Kraft auch durch die bauliche Ausführung (mit ausreichender Genauigkeit) festlegbar ist. Eine Einstellbarkeit ist allerdings insbesondere dann von Vorteil, wenn die Einsatzbedingungen der Vorrichtung in einem Maße variieren können, das bei einer fixen Einstellung zu einer zu großen Schwankung der wirkenden Kräfte führen würde.

Im Zusammenhang von klassischen Trägheitsantrieben ("Stick-Slip") sind verschiedene Mittel zum Einstellen einer Reibkraft bekannt, wobei dieses Mittel auch zum Einstellen der Normalkraft nutzbar sind. Der Fachmann ist mit diesen Mitteln ausreichend vertraut, so dass hier solche Mittel nicht weiter diskutiert werden müssen.

Besonders vorteilhaft ist es, wenn die Anpresskraft des mindestens einen Wälzkörpers über eine Feder erzeugt wird, wobei diese Feder gegebenenfalls einstellbar sein kann, etwa über Mittel wie z.B. Schrauben. Dabei ist es vorteilhaft, wenn ein weiter Bereich zum Einstellen der Anpresskraft (die in einem Ruhezustand des Antriebs zu einem statischen Rollwiderstand führt) genutzt werden kann. Das macht es auch unerfahrenen Anwendern möglich, die Kraft richtig zu justieren und erleichtert die Fertigung und Nutzung von erfindungsgemäßen Positioniereinheiten erheblich.

In einer anderen vorteilhaften Ausgestaltung eines Aspekts der Erfindung ist die erfindungsgemäße Vorrichtung zusammen mit dem zu positionierenden Objekt und einer Steuereinheit, die zum Ansteuern des wenigstens einen Aktors ausgestaltet ist, Teil eines Systems zur nicht-resonanten linearen und/oder rotatorischen Positionierung eines Objekts.

In einer anderen vorteilhaften Ausgestaltung eines Aspekts der Erfindung weist die Vorrichtung wenigstens zwei Aktoren auf.

Die Vorrichtung kann als Trägheitsantrieb und insbesondere als Mehraktorantrieb ausgestaltet sein, wobei dabei mehrere Aktoren mit jeweils mindestens einem Wälzkörper vorgesehen sind, der direkt oder indirekt zwischen dem Aktor (bzw. einer kraftübertragenden Struktur) und dem zu positionierenden Objekt angeordnet ist, wobei die Wälzkörper vorgespannt sind, so dass für eine Relativbewegung des Aktors gegenüber dem zu positionierenden Objekt ein Rollwiderstand überwunden werden muss, infolgedessen der Vorschub eines jeden Aktors mit einer Kraft bis zur Höhe des Rollwiderstands übertragen werden kann. Wenn nun die Aktoren mit für Mehraktorantrieben typischen Signalen, z.B. zeitversetzte Sägezähne, angesteuert, so kommen einzelne Wälzkörper ins Abrollen, während die Mehrzahl nicht abrollen (dies gilt für den Fall einer Verwendung von mehr als zwei Aktoren; bei zwei Aktoren und zwei entsprechenden Wälzkörpern würde einer ins Abrollen kommen und der andere nicht). Durch die für Mehraktorantriebe typische, zyklische Ansteuerung, können somit beliebig große Strecken zurückgelegt werden. Erfindungsgemäße Vorrichtungen können in unterschiedlicher Weise in Mehraktorantriebsvorrichtungen verwendet werden. Eine sehr flexible Variante ist es, wenn mehrere der erfindungsgemäßen Antriebsvorrichtungen parallel eingesetzt werden. Die Aktoren der verschiedenen Antriebsstrukturen können dann mit für Trägheitsantrieben geeigneten Steuersignalen angetrieben werden und treiben somit ein gemeinsam zu bewegendes Objekt an. Alternativ kann eine stationäre Basis auch mit mehreren Aktoren ausgestattet sein, so dass schon mit einer Antriebsstruktur eine Bewegung gemäß eines Mehraktorantriebs erzeugt werden kann. Dabei spielt es keine Rolle, ob die Aktoren und Wälzkörper dabei mechanisch parallel oder seriell auf das zu bewegende Objekt wirken.

Die Antriebe können für lineare und rotatorische Trägheits- oder Mehraktorantriebsvorrichtungen verwendet werden. Es sind auch Antriebsvorrichtungen mit mehr als einem Freiheitsgrad möglich.

Das zu positionierende Objekt kann sowohl einteilig sein als auch aus mehreren Komponenten bestehen, die in direkter oder indirekter Verbindung stehen.

Ziel kann es sein, entweder das Objekt als solches zu bewegen oder einen anderen Gegenstand über die Positionierung des Objekts mit zu bewegen (hierbei ist dann die Bewegung bzw. Positionierung des Objekts Mittel zu einer Bewegung oder Positionierung des anderen Gegenstands).

Insbesondere kann eine hochauflösende Bewegung des Objekts durch eine erfindungsgemäße Vorrichtung durch einen Einsatz von Wegsensoren, wie z.B. optischen Encodern oder Laserinterferometern überwacht bzw. unterstützt werden.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus den obigen Erläuterung und der folgenden Diskussion zu entnehmen sind. Hierbei ist zu verstehen, dass eine Ausführungsform, die im Zusammenhang mit einem erfindungsgemäßen Verfahren beschrieben ist, ebenso als Ausführungsform einer erfindungsgemäßen Vorrichtung zu verstehen ist, was auch umgekehrt gilt.

Im Folgenden wird die vorliegende Erfindung anhand von in den Figuren dargestellten Ausführungsbeispielen weiter illustriert und erläutert. Hierbei zeigt
- Fig. 1: eine Prinzipskizze eines bekannten Trägheitsantriebs mit typischer Sägezahnansteuerung,
- Fig. 2: eine schematische Illustration eines bekannten Mehraktorantriebs,
- Fig. 3: eine schematische Darstellung einer Ansteuerung eines bekannten Mehraktorantriebs und der resultierenden Bewegung,
- Fig. 4: eine Prinzipskizze eines bekannten Trägheitsantriebs mit Lagerung des zu positionierenden Objekts,
- Fig. 5: eine Prinzipskizze eines bekannten Trägheitsantriebs, bei dem ein Reibkörper eine rotatorische Bewegung ausführt,
- Fig. 6: eine Prinzipskizze eines bekannten Trägheitsantriebs, bei dem ein Wälzkörper über eine Reibfläche angetrieben wird, wobei die rotatorische Bewegung des Wälzkörpers über ein Abrollen in eine lineare Bewegung überführt wird,
- Fig. 7: eine schematische Darstellung eines ersten Ausführungsbeispiels einer erfindungsgemäßen Antriebsvorrichtung,
- Fig. 8: eine schematische Darstellung eines zweiten Ausführungsbeispiels einer erfindungsgemäßen Antriebsvorrichtung,
- Fig. 9: eine schematische Darstellung eines dritten Ausführungsbeispiels einer erfindungsgemäßen Antriebsvorrichtung,
- Fig.10: eine schematische Darstellung eines vierten Ausführungsbeispiels einer erfindungsgemäßen Antriebsvorrichtung,
- Fig. 11: eine schematische Darstellung eines fünften Ausführungsbeispiels einer erfindungsgemäßen Antriebsvorrichtung und
- Fig. 12: ein schematisches Ablaufdiagramm eines Ausführungsbeispiels eines erfindungsgemäßen Antriebsverfahrens.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

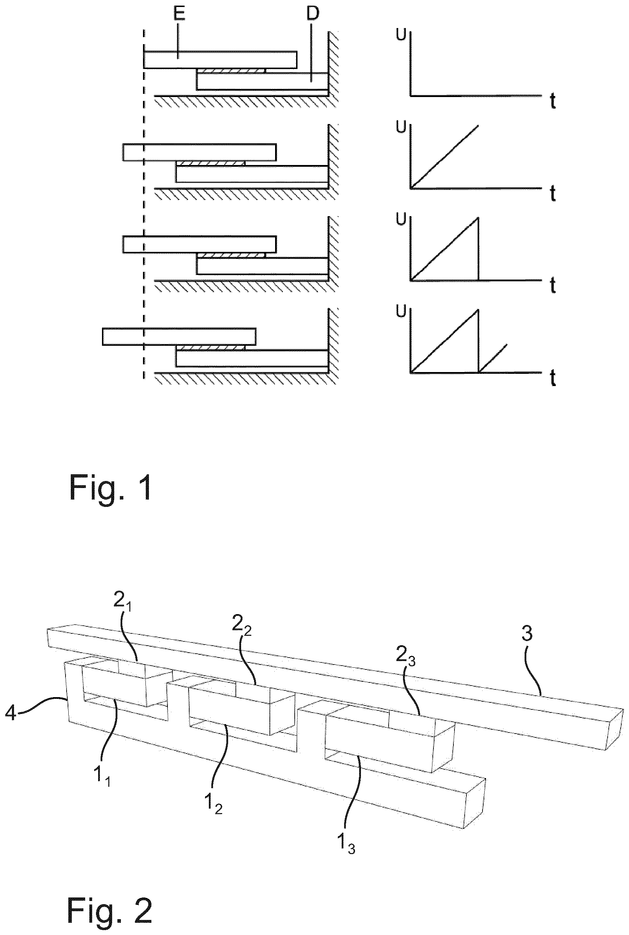

Fig. 1 zeigt eine Prinzipskizze eines bekannten Trägheitsantriebs mit typischer Sägezahnansteuerung.

Bei einem bekannten Trägheitsantrieb ist ein Aktor D vorgesehen, der typischerweise mit einem sägezahn-ähnlichen, periodischen Signal beaufschlagt wird und eine Beschleunigung relativ zu einem reibschlüssig mit dem Aktor verbundenen beweglich gelagerten Läufer E bewirkt. An der abfallenden Flanke der Aktorsignals zieht sich der Aktor D wieder zusammen, wobei infolge der Trägheit des Läufers E dieser dem Rückzug des Aktors D nicht folgt, so dass sich eine Relativverschiebung zwischen Aktor D und Läufer E ergibt.

Werden mehrere solcher Antriebe parallel zueinander eingesetzt, lassen sich einfach sogenannten Mehraktorantriebe aufbauen.

Fig. 2 zeigt eine schematische Illustration eines bekannten Mehraktorantriebs.

Ein bekannter Mehrantrieb weist mehrere Aktoren auf. In diesem Fall sind drei Aktoren 1₁, 1₂, 1₃ vorgesehen, wobei der Mehraktorantrieb aber im Grunde beliebig viele Aktoren aufweisen kann, die jeweils über ein Ansteuersignal individuell oder in Gruppen zu einem begrenzten Hub (im Falle von Piezoaktoren in der Regel bis zu einigen µm) angeregt werden können. Die Aktoren weisen jeweils eine Reibstelle 2₁, 2₂, 2₃ auf, die mit einem Läufer 3 in Reibkontakt stehen. Die Aktoren stehen jeweils mit einem Träger 4 in festen Kontakt.

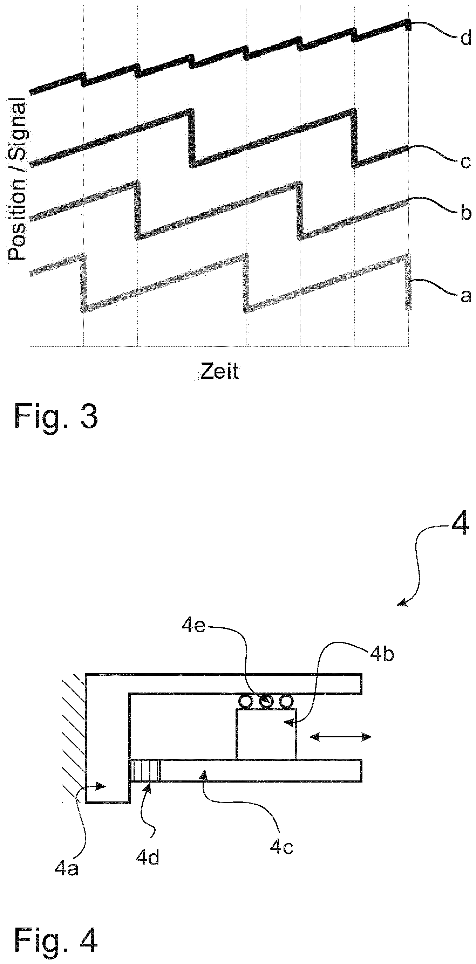

Fig. 3 zeigt eine schematische Darstellung einer Ansteuerung eines bekannten Mehraktorantriebs, wie er in Fig. 2 gezeigt ist, und der resultierenden Bewegung. In Fig. 3 sind typische Spannungsverläufe a, b, c über die Zeit zur Ansteuerung der drei Aktoren dargestellt, wobei jeweils eine zeitversetzte Sägezahnansteuerung vorliegt. Hierbei ergibt sich die in Fig. 3 die daraus für den Läufer resultierende typische Bewegung d.

Fig. 4 zeigt eine weitere Prinzipskizze eines bekannten Trägheitsantriebs 4, bei dem das zu positionierende Objekt 4b per Wälzkörper 4e gegenüber der stationären Komponente 4a gelagert ist. Der Aktor 4d lässt durch eine geeignete Ansteuerung den mit dem zu positionierenden Objekt in Reibkontakt stehenden Reibkörper 4c schwingen, so dass es bei einer hohen Beschleunigung zum Durchrutschen der Reibfläche kommt, aber bei einer langsamen Beschleunigung nicht. Selbstverständlich kann das zu positionierende Objekt 4b auch als stationär gedacht werden, so dass das das zuvor stationäre Objekt 4a zum zu positionierenden (beweglichen) Objekt wird.

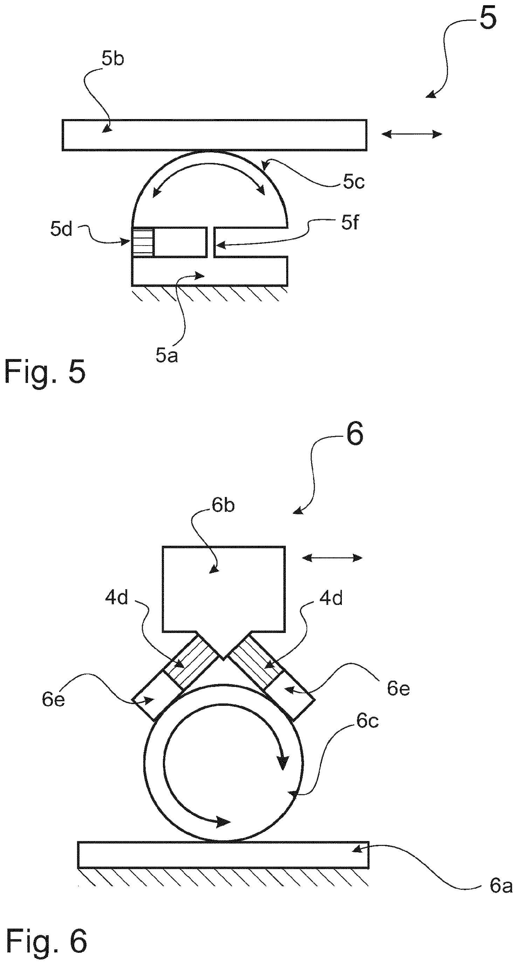

Fig. 5 zeigt eine weitere Prinzipskizze eines bekannten Trägheitsantriebs 5, bei dem das zu positionierende Objekt 5b über einen Reibkörper 5c antrieben wird, der eine rotatorische Bewegung ausführt und von dem Aktor 5d zur Schwingung angeregt wird, so dass das zu positionierende Objekt 5b gemäß dem Prinzip eines Trägheitsantriebs relativ zum stationären Objekt 5a bewegt wird. Gemäß dieser Skizze kippt der Reibkörper 5c gegenüber der stationären Basis 5a um das Gelenk 5f, wenn der Aktor 5d sich streckt oder kürzt.

Fig. 6 zeigt eine weitere Prinzipskizze eines bekannten Trägheitsantriebs 6, bei dem das zu positionierende Objekt 6b gemäß dem Prinzip des Trägheitsantriebs gegenüber einer stationären Komponente 6a vorangerieben wird, indem ein Reibkörper 6c über an Aktoren befestigte Reibflächen 6e zur rotatorischen Bewegung angeregt wird. (z.B. aus "Driving principles of Mobile Microrobots for Micro- and Nanohandling" von Kortschack, Hänßler, Rass und Fatikow (Proceedings of the 2003 IEEE/RSJ Int. Conference on Intelligent Robots and Systems, Las Vegas, Nevada, USA, Oktober 2003 Seiten 1895 bis 1900)) Der die Oberfläche des Reibkörpers 6c steht in Reibkontakt mit den Reibflächen 6e, so wie für Trägheitsanriebe gemäß dem Stand der Technik üblich. Die Rollbewegung des Reibkörpers 6c wird über ein Abrollen auf dem stationären Objekt 6a in eine lineare Bewegung des Trägheitsantriebs überführt.

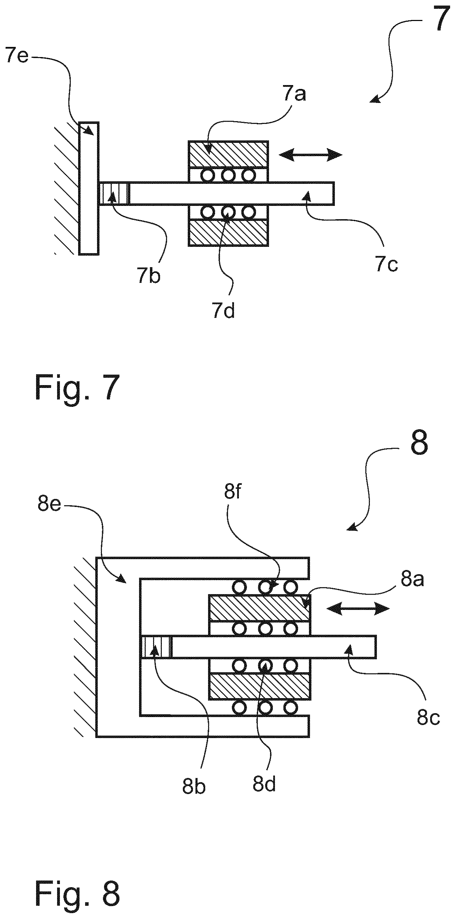

Fig. 7 zeigt eine schematische Darstellung eines ersten Ausführungsbeispiels einer erfindungsgemäßen Antriebsvorrichtung.

Die Antriebsvorrichtung 7 gemäß dem ersten Ausführungsbeispiel umfasst ein anzutreibendes Objekt 7a und einen Aktor 7b, der vorliegend direkt mit einer kraftübertragenen Struktur 7c verbunden ist. Es kann auch vorgesehen sein, den Aktor indirekt mit der kraftübertragenden Struktur zu verbinden Ein Wälzkörper 7d wird zwischen der kraftübertragende Struktur 7c und dem zu positionierenden Objekt 7a gespannt, so dass der Wälzkörper zum Abrollen ein von der Höhe der Vorspannung abhängigen Rollwiderstand zu überwinden hat, bevor das anzutreibende Objekt 7a makroskopisch gegenüber dem stationären Objekt 7e bewegt wird. Hierbei stellt die kraftübertragende Struktur 7c ein Beispiel eines Gegenlagers dar. Wird nun vom Aktor 7b eine ausreichend geringe Beschleunigung aufgebracht, so bleibt die Massenträgheitskraft des damit (indirekt über die kraftübertragende Struktur) beschleunigten Objekts 7a unterhalb des Rollwiderstands von des Wälzköpers 7d, so dass es nicht zu einer Relativbewegung zwischen dem anzutreibenden Objekt 7a und der kraftübertragenden Struktur 7c kommt. Wenn jedoch die Beschleunigung so hoch ist, dass die Massenträgheitskraft den Rollwiderstand übertrifft, kommt es zu einer Relativbewegung zwischen dem anzutreibenden Objekt 7a und der kraftübertragenden Struktur 7c. Durch ein, für Trägheitsantriebe typisches, richtungsabhängiges Beschleunigen, können somit, makroskopische Bewegungen des zu positionierenden Objekts 7a realisiert werden.

Soweit hier auf einen Rollwiderstand abgestellt wird, ist dies bei einem relativen Stillstand zwischen zu bewegendem Objekt 7a und der kraftübertragenden Struktur 7c als der Widerstand zu verstehen, der einer Aufnahme eines Abrollens des Wälzkörpers entgegengesetzt ist. Es kann sein, dass dieser Widerstand ("Anfahrwiderstand") größer ist als der, der zur Aufrechterhaltung des Abrollens notwendig ist, wobei sich im Fall eines Unterschieds aus dem Kontext ergibt, ob der Rollwiderstand im engeren Sinne oder der Anfahrwiderstand gemeint ist.

Bei einer Ausgestaltung, wie sie in Fig. 7 gezeigt ist, rollt der Wälzkörper 7d sowohl gegenüber der Oberfläche des anzutreibenden Objekts 7a als auch gegenüber der Oberfläche der kraftübertragenden Struktur 7c ab. Nimmt man etwa die kraftübertragende Struktur 7a als Referenz an, so weisen der Wälzkörper 7d einerseits und das zu bewegende Objekt 7a andererseits beim Abrollen unterschiedliche Relativgeschwindigkeiten auf, wobei sich zudem der Wälzkörper 7d ohnehin gegenüber der kraftübertragenden Struktur 7c und auch gegenüber dem zu bewegenden Objekt 7a bewegt. Ohne weitere Maßnahmen ist damit der mögliche Hub bei einer derartigen Anordnung durch die Abmessungen von kraftübertragender Struktur 7c und zu bewegendem Objekt 7a beschränkt. Angesichts dessen kann aber durch eine entsprechend lange Ausgestaltung auch der gewünschte Hub erreicht werden. Es kann allerdings - auch und gerade bei in der Länge beschränkter Ausgestaltung - durch zusätzliche Maßnahmen erreicht werden, dass zwischen dem zu bewegenden Objekt 7a und der kraftübertragenden Struktur 7c jederzeit ein abrollendes Element vorhanden ist, indem beispielsweise der Wälzkörper in Form etwas einer an sich bekannten (vorgespannten) Kugel- oder Walzenumlaufführung vorgesehen wird, z.B. wie bekannt als Einsatz in Kugel- bzw. Walzenumlaufführungen, Kugel- bzw. Walzenumlaufschuhen, Kugelumlaufbuchsen, etc..

Fig. 8 zeigt eine schematische Darstellung eines zweiten Ausführungsbeispiels einer erfindungsgemäßen Antriebsvorrichtung.

Die Antriebsvorrichtung 8 entspricht weitgehend der Antriebsvorrichtung 7 aus Fig. 7, wobei im Folgenden auf den Unterschied, nämlich die zusätzliche Lagerung des zu bewegenden Objekts eingegangen wird. Entsprechende Elemente der Antriebsvorrichtungen 7 und 8 sind mit ähnlichen Bezugszeichen versehen.

Es ist von Vorteil, wenn in Ergänzung zur Antriebsvorrichtung 7 das anzutreibende Objekt 8a gegenüber der stationären Basis 8e über ein Lager 8f geführt wird. Dabei kann es sich z.B. um ein Wälzlager handeln. Es ist von Vorteil, denn das Lager 8f im Vergleich zum vorgespannten Lager / Wälzkörper 8d leichtgängig ist, so dass das Lager 8f die Bewegung des zu bewegenden Körpers 8e nicht behindert.

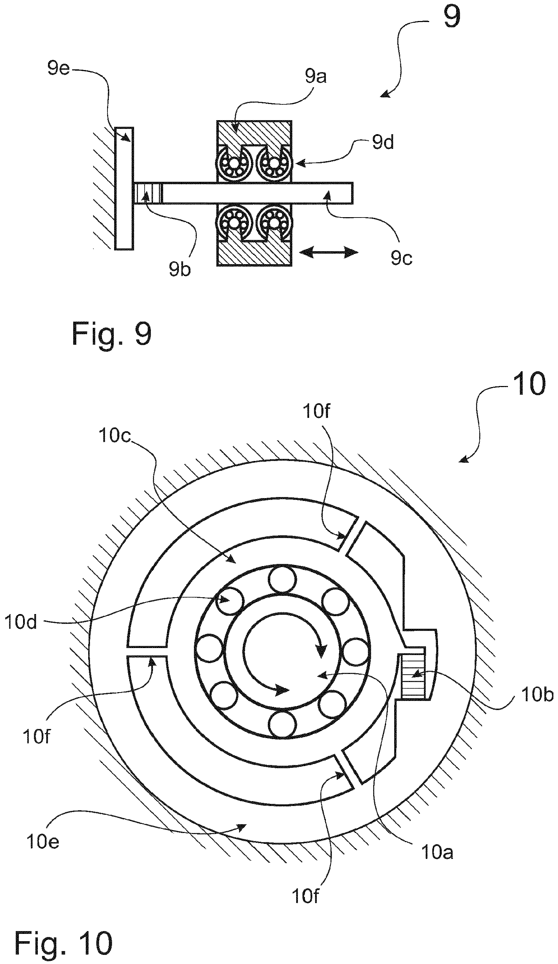

Fig. 9 zeigt eine schematische Darstellung eines dritten Ausführungsbeispiels einer erfindungsgemäßen Antriebsvorrichtung, wie wiederum ähnlich zur Antriebsvorrichtung aus Fig. 7 ist.

Die Antriebsvorrichtung 9 gemäß dem dritten Ausführungsbeispiel umfasst, ähnlich zur Antriebsvorrichtung 7 des ersten Ausführungsbeispiels, ein anzutreibendes Objekt 9a und einen Aktor 9b, der direkt oder indirekt mit einer kraftübertragenden Struktur 9c verbunden ist. In der Antriebsvorrichtung 9 werden in sich vorgespannte Wälzlager 9d verwendet, dessen Rollwiderstand überwunden werden muss, um eine makroskopische Bewegung des anzutreibenden Objekts 9a gegenüber dem stationären Objekt 9e zu erzielen.

Im Ausführungsbeispiel, das in Fig. 9 gezeigt ist, sind die Wälzlager 9d mit dem anzutreibenden Objekt 9a verbunden, wobei es ebenso möglich ist, die Wälzlager mit der kraftübertragenden Struktur zu verbinden, so dass das Abrollen der Aussenseiten auf der (Innen-)Oberfläche des anzutreibenden Objekts erfolgt. Es ist ebenfalls möglich, eine Teilmenge der Wälzlager mit dem anzutreibenden Objekt zu koppeln und die anderen Wälzlager mit der kraftübertragenden Struktur zu koppeln.

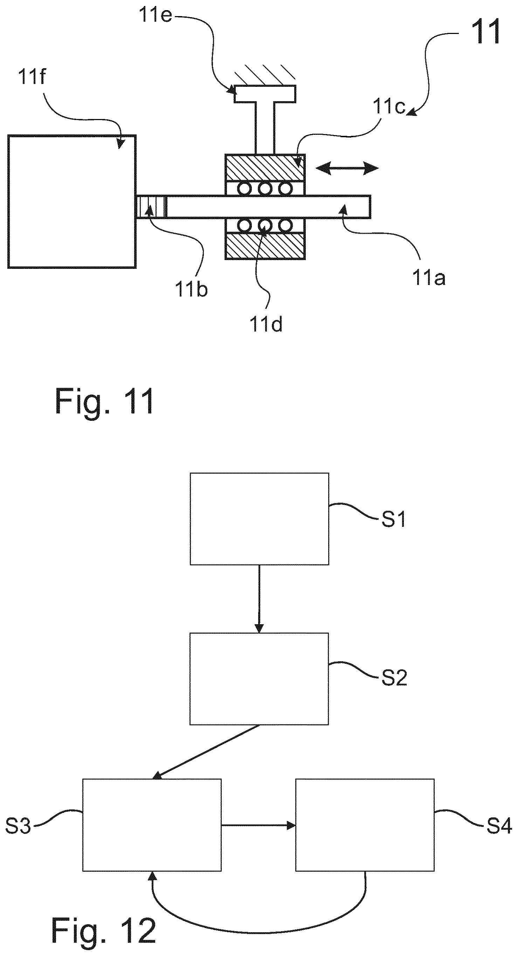

Auch, wenn in den Fig. 7 bis 9 (und auch Fig. 11, siehe unten) jeweils eine lineare Antriebsvorrichtung gezeigt wurde, kann das Prinzip so auch für rotatorische Antriebsvorrichtungen genutzt werden.

Wenn mehrere Aktoren bzw. Antriebe parallel vorliegen, kann die Ansteuerung u.a. auch gemäß zum Betrieb eines Mehraktorantriebs erfolgen.

Fig. 10 zeigt eine schematische Darstellung eines vierten Ausführungsbeispiels einer erfindungsgemäßen Antriebsvorrichtung.

Die Antriebsvorrichtung 10 gemäß dem vierten Ausführungsbeispiel umfasst, ähnlich zur den Antriebsvorrichtungen gemäß der ersten drei Ausführungsbeispiele, ein anzutreibendes Objekt 10a und einen Aktor 10b, der direkt (oder auch indirekt) mit einer kraftübertragenden Struktur 10c verbunden ist. Das anzutreibende Objekt 10a ist gegenüber der kraftübertragenden Struktur 10c (und damit auch gegenüber der stationären Basis 10e) über ein vorgespanntes Lager 10d gelagert, dessen Rollwiderstand bestimmt, welche Kraft vom Aktor 10b auf das anzutreibende Objekt 10a übertragen werden kann. In der Prinzipskizze zur Antriebsvorrichtung ist die kraftübertragende Struktur 10c über Festkörpergelenke 10f begrenzt drehbar gelagert. Die Festkörpergelenke 10f lenken gleichzeitig die lineare Bewegung des Aktors 10b in eine rotatorische Bewegung um. Solche Festkörpergelenke 10f sind eine Option aber keine Notwendigkeit. Es ist von Vorteil, wenn auch nicht notwendig, wenn das anzutreibenden Objekt 10a gegenüber einer stationären Basis 10e über eine (nicht dargestellte) weitere Lagerung geführt wird, so dass von diesem weiteren Lager externe Kräfte aufgenommen werden

Auch, wenn es in den Ausführungsbeispielen nicht dargestellt ist, so ist es für den Fachmann klar, dass die Laufflächen, auf denen der mindestens eine Wälzkörper abrollt, sowohl auf der Seite des zu positionierenden Objekts, als auch auf der Seite des Aktors direkt oder indirekt verbunden sein können und es sogar ausreichen kann, wenn diese nur angepresst sind.

Fig. 11 zeigt eine schematische Darstellung eines fünften Ausführungsbeispiels einer erfindungsgemäßen Antriebsvorrichtung.

Abweichend von den ersten vier Ausführungsbeispielen ist der Aktor 11b hier in eine Kombination des zu bewegenden Objekts 11a und einer Trägheitsmasse 11f integriert.

Die Vorrichtung umfasst eine stationäre Basis 11e, an der ein Gegenlager 11c vorgesehen ist. Das zu bewegende Objekt 11a erstreckt sich durch dieses Gegenlager 11c hindurch, wobei zwischen dem zu bewegenden Objekt 11a und dem Gegenlager 11c ein Wälzkörper 11d vorgesehen ist, so dass es zu einem Abrollen kommen kann.

Das zu bewegende Objekt 11a ist über den Aktor 11b mit einer Trägheitsmasse 11f verbunden.

Ein Strecken oder Zusammenziehen des Aktors 11b wirkt sich auf den Schwerpunkt der Kombination von Trägheitsmasse 11f und zu bewegenden Objekt 11a aus in einem Koordinatensystem dieser Kombination aus. Infolge der Massenträgheit verbleibt - ohne äußere einwirkende Kräfte - der Schwerpunkt in einem äußeren Koordinatensystem allerdings an Ort und Stelle. Erfolgt die relative Bewegung zwischen Trägheitsmasse 11f und zu bewegendem Objekt 11a mit einer ausreichenden Beschleunigung, so wird dabei der Rollwiderstand des Wälzkörpers 11d überwunden, während ein Ansteuern des Aktors 11b mit einer ausreichenden kleinen Beschleunigung dazu führt, dass das zu bewegende Objekt 11a vom Wälzkörper 11d gehalten wird, so dass der Schwerpunkt der Kombination von Trägheitsmasse 11f und zu bewegenden Objekt 11a auch im äußeren Koordinatensystem bewegt werden kann.

Fig. 12 zeigt ein schematisches Ablaufdiagramm eines Ausführungsbeispiels eines erfindungsgemäßen Antriebsverfahrens.

Die vorliegende Erfindung sieht ein nicht-resonantes Antriebsverfahren vor, wobei dieses Verfahren insbesondere ein Anordnen mindestens eines Wälzkörpers zwischen einem Aktor (oder einer kraftübertragenden Struktur, die direkt oder indirekt mit dem Aktor verbunden ist) und einem anzutreibenden Objekt, ein Vorspannen des mindestens einen Wälzkörpers auf einen Rollwiderstand in einer Höhe, die eine für den Antrieb technisch nutzbare Kraft ergibt, und ein Bewegen des mindestens einen Aktors in einer für Trägheitsantriebe typische Art umfasst, wobei abwechselnd hohe und langsame Beschleunigungen vorgesehen werden, so dass der Rollwiderstand periodisch überwunden wird, damit es zu einer makroskopischen Verschiebung des anzutreibenden Objekts kommt.

Das Ablaufdiagramm von Fig. 12 umfasst in Schritt S1 ein Anordnen eines Wälzkörpers zwischen einem Gegenlager und dem zu positionierenden Objekt, so dass der Wälzkörper auf einer Rollfläche abrollen kann, wobei die eine Rollfläche eine Oberfläche des Gegenlagers und/oder eine Oberfläche des zu positionierenden Objekts umfasst.

In Schritt S2 erfolgt ein gezieltes Vorspannen, wobei die zwischen Wälzkörper und Rollfläche vorliegende Normalkraft, die für den Roll- bzw. Anfahrwiderstand relevant ist, auch bereits durch die körperliche Ausgestaltung als solche vorgegeben sein kann, ohne dass diese Kraft dann noch (nachträglich) angepasst werden müsste/könnte. Es kann allerdings auch vorgesehen sein, dass die Vorspannung eingestellt wird, wobei dies bei der Einrichtung der Antriebsvorrichtung, im Laufe der Nutzung der Vorrichtung und/oder im Betrieb geschehen kann.

In den Schritten S3 und S4 erfolgt abwechselnd ein Ansteuern eines Aktors zum Ausführen einer ersten Bewegung, wobei die erste Bewegung auf eine Beschleunigung begrenzt ist, bei der ein Widerstand gegenüber einem Aufnehmen eines Abrollens des Wälzkörpers auf der Rollfläche nicht überwunden wird, und ein Ansteuern des Aktors zum Ausführen einer der ersten Bewegung entgegen gerichteten zweiten Bewegung, wobei die zweite Bewegung eine Beschleunigung umfasst, mit der ein Rollwiderstand zwischen Wälzkörper und Rollfläche überwunden wird.

Die Schritte S3 und S4 werden solange abwechselnd durchgeführt, bis das Objekt an der gewünschten Position angekommen ist.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutieren Kombinationen nicht die einzig möglichen sind. Insbesondere können einander entsprechende Einheiten oder Merkmalskomplexe aus unterschiedlichen Ausführungsbeispielen miteinander ausgetauscht werden.

Auch wenn sich die oben diskutierten Ausführungsbeispiele vornehmlich auf eine lineare Bewegung des anzutreibenden Objekts beziehen ist, die Erfindung nicht auf eine solche lineare Bewegung beschränkt und eine rotatorische Bewegung sowie zusammengesetzte Bewegungen und Positionierungen sind ebenfalls möglich.

Vorzugsweise sind die relativ zum stationären Teil zu bewegenden Objekte beweglich über ein oder mehrere Walzkörperführungen oder eine Gleitlagerung gelagert. Als Lager können auch andere Lager, wie z.B. Luftlager oder magnetische Lager eingesetzt werden.

Bevorzugt ist es, dass die den mindestens einen vorgespannten Wälzkörper vorspannende Kraft, und damit den Rollwiderstand, über eine einstellende Federstruktur festgelegt wird. Es ist möglich, dass die Wirkrichtung der zum Einsatz kommenden Federn durch eine mechanische Struktur umgelenkt wird.

Es ist ferner möglich, dass mehrere Aktoren parallel eingesetzt werden, so dass die Aktoren so angesteuert werden können, dass eine anzutreibende Fläche auch gemäß dem Prinzip des Mehraktorantriebs angesteuert werden kann.

Grundsätzlich lassen sich alle Verfahren und Techniken, die im Zusammenhang mit auf Gleitreibung basierenden Trägheitsantrieben bekannt sind, auch auf die erfindungsgemäßen auf dem Rollwiderstand basierenden Antriebsvorrichtungen anwenden.

Die vorliegende Erfindung wurde insbesondere in den Ausführungsbeispielen in der Weise beschrieben, dass die Antriebsvorrichtung als solche ortsfest ist, während das zu bewegende Objekt relativ zur Basis und damit auch absolut bewegt wird. Es muss jedoch verstanden werden, dass die Bewegung zwischen Basis und Objekt primär als die Relativbewegung zwischen diesen Elementen zu verstehen ist. Es ist ebenfalls möglich, dass die Bewegung zwischen Objekt und Basis sich als eine absolute Bewegung der Antriebsvorrichtung äußert, wobei dann das Objekt absolut gesehen ortsfest bleiben würde. Ebenso ist es möglich, dass die Relativbewegung zu einer jeweiligen Absolutbewegung von sowohl Basis als auch Objekt (in jeweils entgegengesetzter Richtung) führt.

Ein Ausführungsbeispiel der Erfindung sieht eine Antriebsvorrichtung zur nicht-resonanten linearen und/oder rotatorischen Positionierung eines Objekts mit mindestens einem Wälzkörper zwischen einem zu positionierenden Objekt und mindestens einem Aktor (bzw. einer kraftübertragenden Struktur) vor, wobei der mindestens eine Wälzkörper direkt oder indirekt zwischen dem zu positionierenden Objekt und dem Aktor (bzw. der kraftübertragenden Struktur) gepresst wird (hier kann der Wälzkörper weder zum Aktor noch zum zu positionierenden Objekt eine feste Verbindung aufweisen), so bei der Relativbewegung zwischen dem Aktor, bzw. der kraftübertragenden Struktur, und dem zu positionierenden Objekt ein Rollwiderstand überwunden werden muss, wobei der Rollwiderstand auf eine Höhe gestellt ist, die einen technisch nutzbaren Antrieb ergibt, wobei der Vorschub des Aktors bei einer niedrigen Beschleunigung des Aktors und entsprechend geringer Massenträgheit über den Wälzkörper auf das zu positionierende Objekt übertragen wird, und wobei der Vorschub des Aktors bei einer hohen Beschleunigung des Aktors und entsprechend hoher Massenträgheit zu einem geringeren Anteil - bis überhaupt nicht - auf das zu positionierende Objekt übertragen wird.

Ein anderes Ausführungsbeispiel der Erfindung sieht eine Antriebsvorrichtung zur nicht-resonanten linearen und/oder rotatorischen Positionierung eines Objekts mit mindestens einem Wälzkörper zwischen einem zu positionierenden und einem stationären Objekt vor, wobei der mindestens eine Wälzkörper direkt oder indirekt zwischen dem zu positionierenden Objekt und dem stationären Objekt vorgespannt wird (hierbei kann der Wälzkörper weder mit dem stationären noch zum zu positionierenden Objekt eine feste Verbindung aufweisen), so dass bei der Relativbewegung zwischen stationären Objekt und dem zu positionierenden Objekt ein Rollwiderstand überwunden werden muss, wobei der Rollwiderstand auf eine Höhe gestellt ist, die einen technisch nutzbaren Antrieb ergibt, wobei über mindestens einen mit Signalfolgen angesteuerter Aktor zwei Objekte mit unterschiedlichen Massen relativ zueinander bewegt (beschleunigt) werden, so dass sich Nettoimpulse ergeben, die, wenn sie groß genug ausfallen (bei hohen Beschleunigungen) zur Überwindung des Rollwiderstands des vorgespannten Wälzlagers führen, so dass es zu einer Relativbewegung des zu positionierenden Objekts gegenüber dem stationären Objekt kommt, aber, bei geringen Impulsen, aufgrund geringer Beschleunigungen der beiden Massen, den Rollwiderstand nicht überwindet, so dass es auch nicht zur Relativbewegung des zu bewegenden Objekts gegenüber dem stationären Objekt kommt.

Ein weiteres Ausführungsbeispiel der Erfindung sieht ein Verfahren zur nicht-resonanten linearen und/oder rotatorischen Positionierung eines Objekts vor, das die Schritte eines Anordnens von mindestens einem Wälzkörper zwischen dem Aktor, bzw. einem mit dem Aktor direkt oder indirekt verbundenen kraftübertragenden Struktur, und dem anzutreibenden Objekt, des Vorspannens des mindestens einen Wälzkörpers auf einen für den Antrieb ausgelegten, technisch nutzbaren Rollwiderstand und des Bewegens mindestens einen Aktors in einer für Trägheitsantriebe typische Art, wobei abwechselnd hohe und langsame Beschleunigungen vorgesehen werden, so dass der Rollwiderstand periodisch überwunden wird, so dass es zu einer makroskopischen Verschiebung des anzutreibenden Objekts kommt.

### Bezuqszeichenliste

- 7, 8, 9,10, 11: Antriebsvorrichtung (Vorrichtung)
- 7a, 8a, 9a, 10a, 11a: zu bewegendes Objekt
- 7b, 8b, 9b, 10b, 11b: Aktor
- 7c, 8c, 9c, 10c: kraftübertragende Struktur (Gegenlager)
- 7d, 8d,11d: Wälzkörper
- 7e, 8e, 9e, 10e, 11e: stationäres Objekt (Basis)
- 8f: Lager (Führung)
- 9d, 10d: vorgespanntes Wälzlager (Wälzkörper)
- 10f: Festkörpergelenk
- 11c: Gegenlager
- 11f: Trägheitsmasse
- S1: Anordnen
- S2: Vorspannen
- S3: Ansteuern für erste Bewegung
- S4: Ansteuern für zweite Bewegung

## Patentansprüche

1. Vorrichtung (7, 8, 9, 10, 11) zur nicht-resonanten linearen und/oder rotatorischen Positionierung eines Objekts (7a, 8a, 9a, 10a, 11a), mit:
wenigstens einem Aktor (7b, 8b, 9b, 10b, 11b),
wenigstens einem Wälzkörper (7d, 8d, 9d, 10d, 11d),
wenigstens einem Gegenlager (7c, 8c, 9c, 10c, 11c),
wobei das wenigstens eine Gegenlager (7c, 8c, 9c, 10c, 11c) und der wenigstens eine Wälzkörper (7d, 8d, 9d, 10d, 11d) dazu ausgestaltet sind, dass der wenigstens eine Wälzkörper (7d, 8d, 9d, 10d, 11d) zwischen dem Gegenlager (7c, 8c, 9c, 10c, 11c) und dem zu positionierenden Objekt (7a, 8a, 9a, 10a, 11a) anzuordnen ist, so dass der Wälzkörper (7d, 8d, 9d, 10d, 11d) auf wenigstens einer Rollfläche abrollen kann, wobei die wenigstens eine Rollfläche eine Oberfläche des Gegenlagers (7c, 8c, 9c, 10c, 11c) und/oder eine Oberfläche des zu positionierenden Objekts (7a, 8a, 9a, 10a, 11a) umfasst,
wobei der Aktor (7b, 8b, 9b, 10b, 11b) dazu ausgestaltet ist, wenigstens eine erste Bewegung und eine der ersten Bewegung entgegen gerichtete zweite Bewegung auszuführen, wobei die erste Bewegung auf eine Beschleunigung begrenzt ist, bei der ein Widerstand gegenüber einem Aufnehmen eines Abrollens des wenigstens einen Wälzkörpers (7d, 8d, 9d, 10d, 11d) auf der wenigstens einen Rollfläche nicht überwunden wird, wobei die zweite Bewegung eine Beschleunigung umfasst, mit der ein Rollwiderstand zwischen Wälzkörper (7d, 8d, 9d, 10d, 11d) und Rollfläche überwunden wird.

2. Vorrichtung (7, 8, 9, 10) nach Anspruch 1, wobei
die Vorrichtung (7, 8, 9, 10) eine Basis (7e, 8e, 9e, 10e) aufweist und das wenigstens eine Gegenlager (7c, 8c, 9c, 10c) über den wenigstens einen Aktor (7b, 8b, 9b, 10b) mit der Basis (7e, 8e, 9e, 10e) für eine relative Bewegung des Gegenlager (7c, 8c, 9c, 10c) zur Basis (7e, 8e, 9e, 10e) verbunden ist.

3. Vorrichtung (11) nach einem der vorstehenden Ansprüche, wobei
die Vorrichtung (11) eine Trägheitsmasse (11f) aufweist und der Aktor (11b) dazu ausgestaltet ist, die Trägheitsmasse (11f) mit dem zu positionierenden Objekt (11a) für eine relative Bewegung der Trägheitsmasse (11f) zum zu positionierenden Objekt (11a) zu verbinden.

4. Vorrichtung (8) nach einem der vorstehenden Ansprüche, wobei
die Vorrichtung (8) ferner wenigstens eine Führung (8f) des zu positionierenden Objekts (8a) aufweist.

5. Vorrichtung (8) nach Anspruch 4, wobei
die wenigstens eine Führung (8f) ein Gleitlager, ein Wälzlager, ein magnetisches Lager, ein Luftlager und/oder ein Festkörpergelenk umfasst oder daraus besteht.

6. Vorrichtung (7, 8, 9, 10, 11) nach einem der vorstehenden Ansprüche, wobei
der wenigstens eine Wälzkörper (7d, 8d, 9d, 10d, 11d) eine Walze, eine Nadel, einen Kegel und/oder eine Kugel umfasst oder daraus besteht.

7. Vorrichtung (9) nach einem der vorstehenden Ansprüche, wobei
der wenigstens eine Wälzkörper (9d) ein Kugel- und/oder Walzenlager umfasst.

8. Vorrichtung (7, 8, 9, 10, 11) nach einem der vorstehenden Ansprüche, wobei
die Vorrichtung (7, 8, 9, 10, 11) wenigstens eine einstellbare Vorspanneinheit aufweist, die dazu ausgestaltet ist, eine einstellbare Kontaktkraft zwischen dem wenigstens einen Wälzkörper (7d, 8d, 9d, 10d, 11d) und der wenigstens einen Rollfläche zu bewirken.

9. System zur nicht-resonanten linearen und/oder rotatorischen Positionierung eines Objekts (7a, 8a, 9a, 10a, 11a), mit
einer Vorrichtung (7, 8, 9, 10, 11) nach einem der vorstehenden Ansprüche,
dem zu positionierenden Objekt (7a, 8a, 9a, 10a, 11a) und
einer Steuereinheit, die zum Ansteuern des wenigstens einen Aktors (7b, 8b, 9b, 10b, 11b) ausgestaltet ist.

10. Verfahren zur nicht-resonanten linearen und/oder rotatorischen Positionierung eines Objekts (7a, 8a, 9a, 10a, 11a), mit
Anordnen (S1) eines Wälzkörpers (7d, 8d, 9d, 10d, 11d) zwischen einem Gegenlager (7c, 8c, 9c, 10c, 11c) und dem zu positionierenden Objekt (7a, 8a, 9a, 10a, 11a), so dass der Wälzkörper (7d, 8d, 9d, 10d, 11d) auf einer Rollfläche abrollen kann, wobei die eine Rollfläche eine Oberfläche des Gegenlagers (7c, 8c, 9c, 10c, 11c) und/oder eine Oberfläche des zu positionierenden Objekts (7a, 8a, 9a, 10a, 11a) umfasst,
Ansteuern (S3) eines Aktors (7b, 8b, 9b, 10b, 11b) zum Ausführen einer ersten Bewegung, wobei die erste Bewegung auf eine Beschleunigung begrenzt ist, bei der ein Widerstand gegenüber einem Aufnehmen eines Abrollens des Wälzkörpers (7d, 8d, 9d, 10d, 11d) auf der Rollfläche nicht überwunden wird, und
Ansteuern (S4) des Aktors (7b, 8b, 9b, 10b, 11b) zum Ausführen einer der ersten Bewegung entgegen gerichteten zweiten Bewegung, wobei die zweite Bewegung eine Beschleunigung umfasst, mit der ein Rollwiderstand zwischen Wälzkörper (7d, 8d, 9d, 10d, 11d) und Rollfläche überwunden wird,
wobei das Ansteuern (S3) des Aktors (7b, 8b, 9b, 10b, 11b) zum Ausführen der ersten Bewegung und das Ansteuern (S4) des Aktors (7b, 8b, 9b, 10b, 11b) zum Ausführen der zweiten Bewegung abwechselnd durchgeführt wird, um das Objekt (7a, 8a, 9a, 10a, 11a) zu positionieren.
